# EUROPEAN PATENT APPLICATION

(11) **EP 4 574 319 A1**
(43) Date of publication of application: **25.06.2025**
(21) Application number: 23219024.9
(22) Date of filing: 21.12.2023
(51) Int. Cl.: B23B 51/00, B23B 51/02

(54) **CUTTING HEAD FOR A DRILLING TOOL AND DRILLING TOOL COMPRISING SUCH A CUTTING HEAD**

(71) Applicant: AB Sandvik Coromant, 811 81 Sandviken (SE)
(72) Inventor: ENGSTRÖM, Tord, 811 81 Sandviken (SE)
(74) Representative: Sandvik

(57) **Abstract**

A cutting head (1) for a drilling tool comprising at least one external helical chip flute (3), wherein a margin (10) with a radially outwardly facing margin land (11) extends adjacent to the chip flute along at least a part thereof and a cutting edge (4) is formed at an intersection between the chip flute and a clearance surface (7) on a front face of the cutting head. A leading longitudinal edge of the margin land has an upper edge section (12a) with an angle of inclination that is reduced as compared to the helix angle of the remaining part of the leading longitudinal edge. Said clearance surface comprises a peripheral bevelled area (7a), through which the clearance surface adjoins said margin land, and said cutting edge comprises a cutting edge chamfer (4c) with a chamfer width of between 40 and 100 µm provided along at least a radially outermost part (4b) of the cutting edge.

## Description

### FIELD OF THE INVENTION AND PRIOR ART

The present invention relates to a cutting head according to the preamble of claim 1, which cutting head is detachably attachable to a tool body and configured to form a drilling tool together with the tool body when attached to it. The invention also relates to a drilling tool comprising a tool body and such a cutting head.

Drilling tools may be composed of two separate parts, including an elongated tool body and a cutting head that is detachably attachable to the tool body at the front end thereof and thereby constitutes a replaceable tip of the drilling tool, wherein the cutting edges of the drilling tool are provided on the replaceable cutting head. Hereby, the major part of the drilling tool constituted by the tool body can be made of a comparatively inexpensive material, such as steel, whereas the smaller cutting head can be made of a harder and more expensive material, such as cemented carbide. In a drilling tool of this type, the replaceable cutting head constitutes a wear part that makes contact with the workpieces and is subjected to wear during machining thereof and that can be discarded and replaced with a new cutting head when it has been worn out, whereas the tool body is intended to be re-used with new cutting heads multiple times.

In a drilling tool with replaceable cutting head, the tool body may be provided with two or more axially projecting coupling legs at its front end, wherein the cutting head has a coupling portion that is configured to be received in a space between the coupling legs. During machining of a workpiece with a drilling tool of this type, torque is transferred from the tool body to the cutting head by means of torque transfer surfaces on a respective one of the coupling legs and corresponding torque surfaces on the cutting head, wherein the torque transfer surface on each coupling leg is configured to abut against a corresponding torque surface on the cutting head when the cutting head is attached to the tool body.

In a drilling tool of the above-mentioned type, the cutting head may be fixed to the coupling legs of the tool body by means of a separate fastening element in the form of a screw, as illustrated for instance in US 11 311 948 B2. However, in a drilling tool of the above-mentioned type, the coupling portion of the cutting head may as an alternative be fixed to the coupling legs of the tool body by press fit, as illustrated for instance in US 8 430 609 B2.

A replaceable cutting head for a drilling tool is normally provided with one or more external and helically curved chip flutes that are configured to connect to corresponding chip flutes on the outside of the tool body when the cutting head is attached to the tool body, wherein a margin provided on a peripheral surface of the cutting head extends adjacent to and along each chip flute on the cutting head in a helically curved path corresponding to the helically curved path of the chip flute. Each such margin has a leading longitudinal edge with an axially foremost end point, through which the leading longitudinal edge is connected to a cutting edge formed at an intersection between a front face of the cutting head and the chip flute that borders on the margin. During the drilling of a hole, the cutting head makes contact with the inner wall of the hole through said margins, which are configured to guide the cutting head in the hole so that the hole will be straight and round.

### OBJECT OF THE INVENTION

The object of the present invention is to provide a cutting head of the above-mentioned type that has a new and favourable design.

### SUMMARY OF THE INVENTION

According to the invention, said object is achieved by means of a cutting head having the features defined in claim 1.

The cutting head according to the invention is detachably attachable to a tool body and configured to form a drilling tool together with the tool body when attached to it, wherein:
- the cutting head has a rear end configured to face the tool body and an opposite front end, wherein a longitudinal centre axis of the cutting head extends between the rear end and the front end of the cutting head;
- the cutting head comprises a front face located at the front end of the cutting head; and
- the cutting head comprises one or more external chip flutes, each of which extending in a helically curved path along the cutting head from the front face towards the rear end of the cutting head, wherein a cutting edge is formed at an intersection between each chip flute and a clearance surface on the front face of the cutting head and a margin provided on a peripheral surface of the cutting head extends adjacent to each chip flute along at least a part thereof from the front face towards the rear end of the cutting head, said margin having an upper end facing the front end of the cutting head and an opposite lower end, wherein the margin comprises a radially outwardly facing margin land, which extends between the upper and lower ends of the margin and which has a leading longitudinal edge, an opposite trailing longitudinal edge and an upper transverse edge extending between the leading and trailing longitudinal edges at the upper end of the margin, wherein the leading longitudinal edge has an upper end point, which constitutes the axially foremost point of the leading longitudinal edge and through which the leading longitudinal edge is connected to said cutting edge and to said upper transverse edge, and an opposite lower end point, which constitutes the axially rearmost point of the leading longitudinal edge.

The leading longitudinal edge of said margin land has an upper edge section that extends from the upper end point of the leading longitudinal edge to a dividing point on the leading longitudinal edge located below said upper end point as seen in the axial direction of the cutting head and a lower edge section that extends from said dividing point to the lower end point of the leading longitudinal edge, wherein the lower edge section extends in a helically curved path with a helix angle from the lower end point of the leading longitudinal edge to said dividing point. A rectilinear first reference line that extends between said dividing point and the upper end point of the leading longitudinal edge is inclined at an angle smaller than said helix angle in relation to a plane that contains the centre axis of the cutting head and the upper end point of the leading longitudinal edge. Thus, there is a change in the path of the leading longitudinal edge of the margin land at the dividing point, which can be referred to as a helix angle reduction of the leading longitudinal edge at the upper edge section thereof. This helix angle reduction is achieved by a sort of truncation of the the corner on the cutting head where the leading longitudinal edge of the margin land meets the associated cutting edge, which will make this corner blunter and thereby stronger as compared to the case when the leading longitudinal edge of the margin land extends in a continuous helically curved path along its entire length.

Said clearance surface comprises a peripheral bevelled area, through which the clearance surface adjoins said margin land at the upper transverse edge thereof, wherein this bevelled area is bounded on one of its sides by a radially outermost part of said cutting edge. This bevelled area will make the above-mentioned corner on the cutting head where the leading longitudinal edge of the margin land meets the associated cutting edge blunter and thereby stronger as compared to the case when the clearance surface adjoins the adjacent margin land without any such bevelled area.

Furthermore, said cutting edge comprises a cutting edge chamfer, which is provided along at least said radially outermost part of the cutting edge, wherein this cutting edge chamfer has a chamfer width of between 40 and 100 µm in any position along the longitudinal extension of the cutting edge chamfer. Also this cutting edge chamfer will contribute to make the corner on the cutting head where the leading longitudinal edge of the margin land meets the associated cutting edge blunter and stronger.

The corner on the cutting head where the leading longitudinal edge of the margin land meets the associated cutting edge constitutes the radially outermost point of the cutting edge and thereby the point of the cutting edge that is subjected to the highest linear speed. The high linear speed at this corner implies that the cutting head is subjected to high frictional heating in the area around this corner during drilling of holes in workpieces. If the temperature in this area of the cutting head becomes too high by the frictional heating, the cutting head and the cutting edge might be subjected to damages in this area. The bluntness of the corner in question achieved by the combined effect of said helix angle reduction, said bevelled area of the clearance surface and said cutting edge chamfer implies that there is an increase of material at this sensitive corner on the cutting head, which in its turn implies a more efficient thermal dissipation from the area around this corner as compared to the case when the corner is sharper. Thus, this bluntness of the corner in question will make the cutting head more durable.

In this description and the subsequent claims, the leading longitudinal edge of a margin land refers to the longitudinal edge of a margin land that is located on the periphery of the cutting head in front of the opposite longitudinal edge of the same margin land as seen in the intended direction of rotation of the cutting head when used for drilling of a hole in a workpiece. In the corresponding manner, the trailing longitudinal edge of a margin land refers to the longitudinal edge of a margin land that is located on the periphery of the cutting head behind the opposite longitudinal edge of the same margin land as seen in the intended direction of rotation of the cutting head when used for drilling of a hole in a workpiece.

The above-mentioned helix angle reduction is preferably so adapted that said first reference line is inclined at an angle between -20° and +20°, i.e. at an angle in the range from -20° to +20°, in relation to said plane that contains the centre axis of the cutting head and the upper end point of the leading longitudinal edge.

The above-mentioned dividing point on the leading longitudinal edge is preferably located at a distance of 0.3-3.0 mm below the upper end point of the leading longitudinal edge as seen in the axial direction of the cutting head.

According to an embodiment of the invention, said upper edge section is formed at an intersection between said margin land and a truncation surface on the adjacent chip flute, wherein this truncation surface has a substantially triangular shape and is bounded on a first side by the upper edge section, on a second side by an end section of the cutting edge extending between the upper end point of the leading longitudinal edge and a point on the cutting edge at a distance from said upper end point and on a third side by an edge extending on the chip flute between said point on the cutting edge and said dividing point on the leading longitudinal edge. Said truncation surface may be formed as a single flat surface. However, the truncation surface may as an alternative consist of two or more flat and/or convex sub surfaces.

Said point on the cutting edge is preferably located at a distance of 0.3-3.0 mm from the upper end point of the leading longitudinal edge, as measured along the cutting edge. Furthermore, the above-mentioned cutting edge chamfer is with advantage provided all along said end section of the cutting edge.

The above-mentioned helix angle reduction is preferably so adapted that a rectilinear second reference line that extends between the upper end point of the leading longitudinal edge and said point on the cutting edge is inclined at an angle of 5-30°, preferably 10-30°, in relation to said plane that contains the centre axis of the cutting head and the upper end point of the leading longitudinal edge.

According to another embodiment of the invention, the bevelled area of said clearance surface extends from the upper transverse edge of said margin land at an angle of 30-80°, preferably 35-45°, in relation to a reference plane perpendicular to the centre axis of the cutting head, as seen in any plane that contains the centre axis of the cutting head and extends across the upper transverse edge.

According to another embodiment of the invention, the bevelled area of said clearance surface is convex as seen in any plane that contains the centre axis of the cutting head and extends across the upper transverse edge of said margin land. In this case, the above-mentioned angle of the bevelled area of the clearance surface in relation to a reference plane perpendicular to the centre axis of the cutting head refers to the angle between said reference plane and a tangent to the bevelled area at a point on the bevelled area where the bevelled area meets the upper transverse edge of the margin land.

According to another embodiment of the invention, the trailing longitudinal edge of said margin land is located closer to the centre axis of the cutting head than the leading longitudinal edge of the margin land as seen in any plane that is perpendicular to the centre axis of the cutting head and extends across the margin land, to thereby provide radial clearance for the margin land in a hole that is being drilled and reduce the friction between the margin land and the inner wall of the hole during the drilling. The distance between the centre axis of the cutting head and the margin land is preferably reduced continuously from the leading longitudinal edge to the trailing longitudinal edge of the margin land in any plane that is perpendicular to the centre axis of the cutting head and extends across the margin land. Furthermore, the margin land is preferably convex as seen in any plane that is perpendicular to the centre axis of the cutting head and extends across the margin land.

The above-mentioned helix angle reduction is preferably 25-45°.

According to another embodiment of the invention, said chip flutes are two in number and extend diametrically opposite each other and alongside of each other.

Further advantageous features of the cutting head according to the present invention will appear from the description following below.

The invention also relates to a drilling tool having the features defined in claim 15.

The drilling tool according to the invention comprises an elongated tool body and a cutting head of the above-mentioned type detachably attachable to the tool body, wherein:
- the tool body has a rear end configured for attachment to a machine and an opposite front end, wherein a longitudinal centre axis of the tool body extends between the rear end and the front end of the tool body;
- the tool body at its front end has a coupling portion with two or more coupling legs projecting in the axial direction of the tool body and distributed about the centre axis of the tool body;
- the cutting head has a coupling portion, which is designed for engagement with the coupling portion of the tool body and which is receivable in a space between said coupling legs; and
- each coupling leg is provided with a torque transfer surface for transferring torque from the tool body to the cutting head, which torque transfer surface is configured to abut against a corresponding torque surface on the cutting head when the cutting head is attached to the tool body with the coupling portion of the cutting head received in said space between the coupling legs and with the centre axis of the cutting head coinciding with the centre axis of the tool body.

Further advantageous features of the drilling tool according to the present invention will appear from the description following below.

### BRIEF DESCRIPTION OF THE DRAWINGS

With reference to the appended drawings, a specific description of embodiments of the invention cited as examples follows below. In the drawings:
- Fig 1: is a perspective view of a drilling tool provided with a cutting head according to a first embodiment of the present invention,
- Fig 2: is a perspective view of the drilling tool of Fig 1, with the cutting head and a tool body included in the drilling tool shown separated from each other,
- Fig 3: is a front end view of the drilling tool of Fig 1,
- Fig 4: is a lateral view of a front part of the drilling tool of Fig 1,
- Fig 5: is a cut according to the line V-V in Fig 4,
- Fig 6: is a cut according to the line VI-VI in Fig 4,
- Figs 7a and 7b: are perspective views from different directions of the cutting head included in the drilling tool of Fig 1,
- Figs 7c-7e: are lateral views from different directions of the cutting head of Figs 7a and 7b,
- Fig 7f: is a plan view from below of the cutting head of Figs 7a and 7b,
- Fig 7g: is a plan view from above of the cutting head of Figs 7a and 7b,
- Fig 7h: is a cut according to the line Vllh-Vllh in Fig 7e,
- Fig 7i: is a detail enlargement according to the circle VIIi in Fig 7e,
- Fig 7j: is a detail enlargement according to the circle Vllj in Fig 7d,
- Fig 7k: is a detail enlargement according to the circle Vllk in Fig 7g,
- Figs 7l and 7m: are lateral views from different directions of the cutting head of Figs 7a and 7b, and
- Figs 8a and 8b: are detail enlargements, corresponding to the detail enlargements of Figs 7i and 7j, of a part of a cutting head according to a second embodiment of the invention.

### DETAILED DESCRIPTION OF EMBODIMENTS OF THE INVENTION

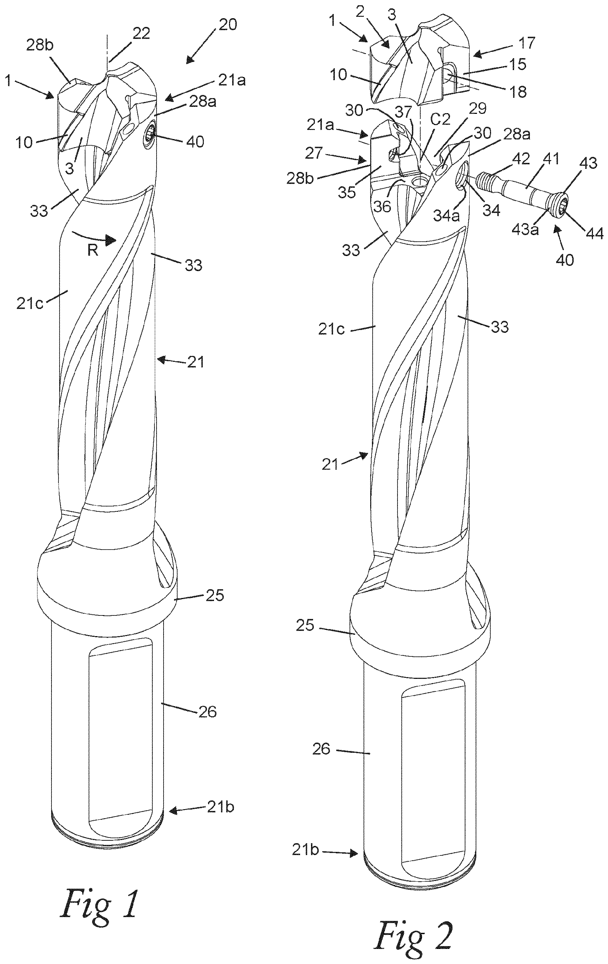

The cutting head 1 according to the present invention is designed for detachable attachment to an elongated tool body 21 at a front end thereof and is configured to form a drilling tool 20 in the form of a twist drill together with the tool body 21 when attached to it, as illustrated in Figs 1-6. The drilling tool 20 is intended to be rotated for machining of a workpiece by drilling. In Figs 1 and 3-6, the drilling tool 20 is shown with the cutting head 1 mounted to the tool body 21 and with the drilling tool 20 ready for machining of a workpiece. The drilling tool 20 is configured to be rotated about an axis of rotation 22. The intended direction of rotation of the drilling tool 20 for machining is marked with the arrow R in Figs 1, 3 and 5. The direction of rotation R constitutes the direction in which the drilling tool 20 is intended to be rotated about the axis of rotation 22 in order to drill a hole in a workpiece. The cutting head 1 is made of hard and wear-resistant material, preferably cemented carbide, and the tool body 21 is preferably made of steel or other suitable metallic material.

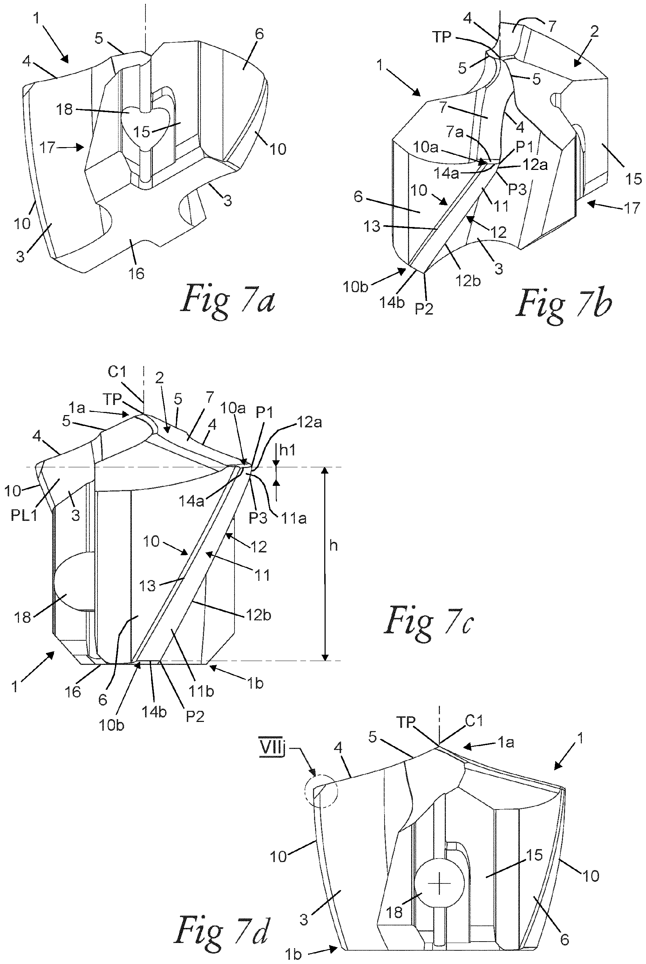

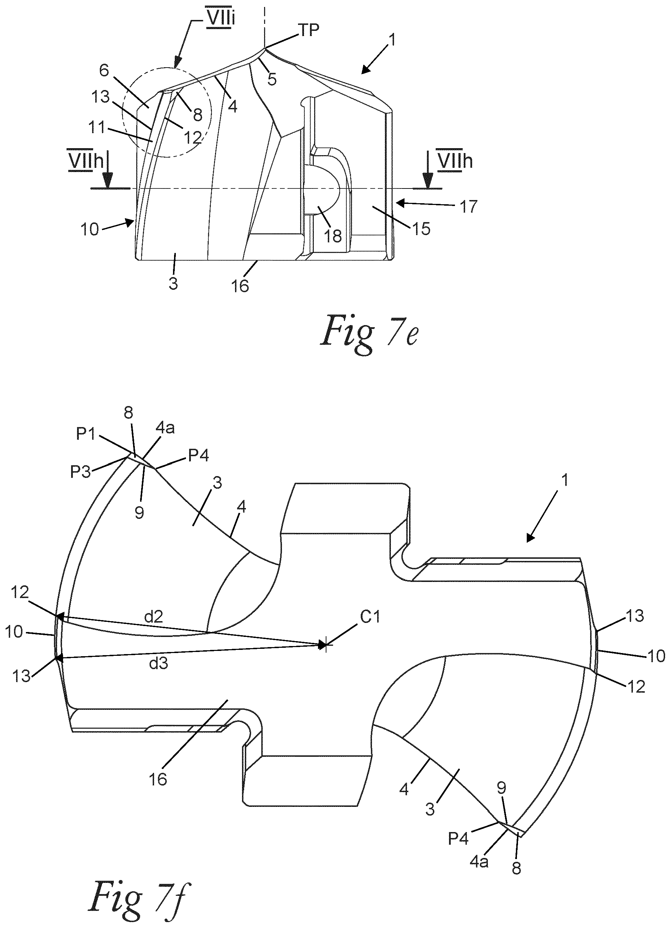

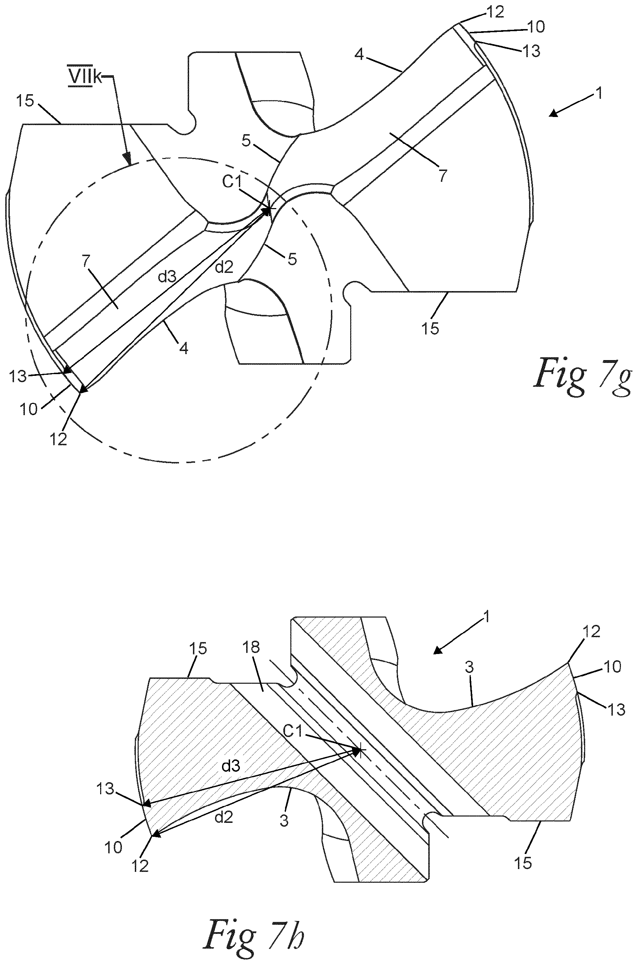

The cutting head 1 included in the drilling tool 20 of Figs 1-6 is illustrated in closer detail in Figs 7a-7m. The cutting head 1 has a rear end 1b configured to face the tool body 21 and an opposite front end 1a. A longitudinal centre axis C1 of the cutting head 1 extends between the rear end 1b and the front end 1a of the cutting head, wherein this centre axis C1 is configured to coincide with the axis of rotation 22 of the drilling tool 20 when the cutting head is attached to the tool body 21.

The cutting head 1 comprises a front face 2 located at the front end 1a of the cutting head and at least one external chip flute 3 that extends in a helically curved path along the cutting head 1 from the front face 2 towards the rear end 1b of the cutting head. In the illustrated embodiment, the cutting head 1 is provided with two such chip flutes 3, which extend diametrically opposite each other and alongside of each other. In this case, the cutting head 1 has 180° rotational symmetry about the centre axis C1 of the cutting head.

A major cutting edge 4 is formed at an intersection between each chip flute 3 and a clearance surface 7 on the front face 2 of the cutting head. The clearance surface 7 is arranged on the front face 2 of the cutting head 1 behind the associated major cutting edge 4, as seen in the intended direction of rotation R of the drilling tool 20. At its radially innermost end, each major cutting edge 4 adjoins to a minor cutting edge 5 that extends on the front face 2 of the cutting head from the associated chip flute 3 towards a tip TP provided at the centre of the front face 2. The tip TP constitutes the axially foremost part of the cutting head 1 and may be provided with a so-called chisel edge.

A margin 10 provided on a peripheral surface 6 of the cutting head 1 extends adjacent to each chip flute 3 along at least a part thereof from the front face 2 towards the rear end 1b of the cutting head. Each margin 10 has an upper end 10a facing the front end 1a of the cutting head and an opposite lower end 10b. Each margin 10 comprises a radially outwardly facing margin land 11, which extends between the upper and lower ends 10a, 10b of the margin and which has a leading longitudinal edge 12 and an opposite trailing longitudinal edge 13. The leading and trailing longitudinal edges 12, 13 extend between the upper and lower ends 10a, 10b of the margin on opposite sides of the margin land 11. The margin land 11 of each margin 10 also has an upper transverse edge 14a, which extends between the leading and trailing longitudinal edges 12, 13 at the upper end 10a of the margin and a lower transverse edge 14b, which extends between the leading and trailing longitudinal edges 12, 13 at the lower end 10b of the margin. In the illustrated embodiment, the margin land 11 of each margin 10 is convexly curved as seen in any plane that is perpendicular to the centre axis C1 of the cutting head 1 and extends across the margin land 11.

The leading longitudinal edge 12 of the margin land 11 of each margin 10 has an upper end point P1, which constitutes the axially foremost point of the leading longitudinal edge 12 and through which the leading longitudinal edge 12 is connected to the adjacent major cutting edge 4 and to the upper transverse edge 14a of the margin land 11, and an opposite lower end point P2, which constitutes the axially rearmost point of the leading longitudinal edge 12 and through which the leading longitudinal edge 12 is connected to the lower transverse edge 14b of the margin land 11. The leading longitudinal edge 12 has:
- an upper edge section 12a that extends from the upper end point P1 of the leading longitudinal edge to a dividing point P3 on the leading longitudinal edge located below said upper end point P1 as seen in the axial direction of the cutting head 1, preferably at a distance h1 (see Fig 7c) of 0.3-3.0 mm below said upper end point P1 as seen in the axial direction of the cutting head 1, and
- a lower edge section 12b that extends from said dividing point P3 to the lower end point P2 of the leading longitudinal edge.

The upper edge section 12a of the leading longitudinal edge 12 of the margin land 11 of each margin 10 suitably has a length h1 in the axial direction of the cutting head 1 that corresponds to 3-20%, preferably 5-10%, of the total length h of the leading longitudinal edge 12 in the axial direction of the cutting head.

In order to provide radial clearance for the margin land 11 of each margin 10, the trailing longitudinal edge 13 of the margin land 11 is preferably located closer to the centre axis C1 of the cutting head 1 than the leading longitudinal edge 12 of the margin land 11 as seen in any plane that is perpendicular to the centre axis C1 of the cutting head and extends across the margin land 11. In this case, the distance d3 between the centre axis C1 of the cutting head 1 and the trailing longitudinal edge 13 of the margin land 11 is slightly smaller than the distance d2 between the centre axis C1 of the cutting head 1 and the leading longitudinal edge 12 of the margin land 11 as seen in any plane that is perpendicular to the centre axis C1 of the cutting head and extends across the margin land 11. The distance between the centre axis C1 of the cutting head 1 and the margin land 11 is preferably continuously reduced from the leading longitudinal edge 12 to the trailing longitudinal edge 13 of the margin land 11 in any plane that is perpendicular to the centre axis C1 of the cutting head 1 and extends across the margin land 11.

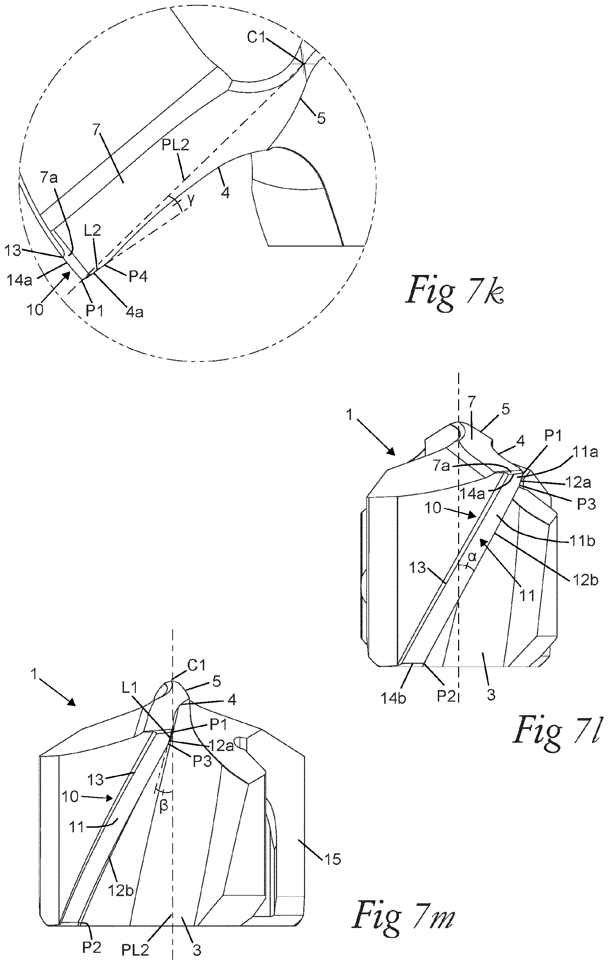

The lower edge section 12b of the leading longitudinal edge 12 of the margin land 11 of each margin 10 extends in a helically curved path with a helix angle α (see Fig 7l) from the lower end point P2 of the leading longitudinal edge 12 to said dividing point P3. The helix angle α is preferably 25-45°. In the illustrated embodiment, this helix angle α is approximately 30°. A helix angle reduction has been introduced at the upper edge section 12a of the leading longitudinal edge 12, wherein a rectilinear first reference line L1 (see Fig 7m) that extends between the dividing point P3 and the upper end point P1 of the leading longitudinal edge 12 is inclined at an angle β smaller than said helix angle α in relation to a plane PL2 that contains the centre axis C1 of the cutting head 1 and the upper end point P1 of the leading longitudinal edge 12 such that there is a significant change in the path of the leading longitudinal edge 12 at the dividing point P3. This helix angle reduction is preferably so adapted that said first reference line L1 is inclined at an angle β between -20° and +20° in relation to said plane PL2. In the embodiment illustrated in Figs 7a-7m, the angle β is approximately 16°. When the helix angle reduction is so adapted that said angle β is 0°, the upper edge section 12a will extend in parallel with the centre axis C1 of the cutting head 1.

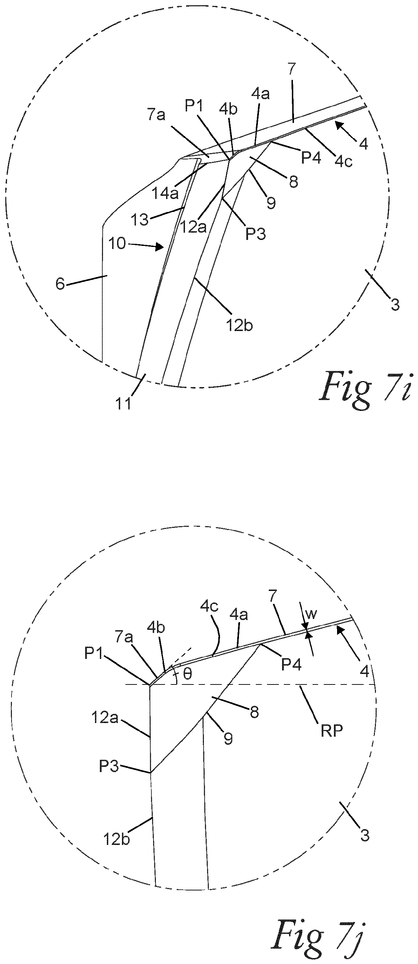

In order to provide the above-mentioned helix angle reduction, a truncation surface 8 with a substantially triangular shape is formed in the associated chip flute 3. As illustrated in Figs 7i and 7j, this truncation surface 8 is bounded:
- on a first side by the upper edge section 12a of the leading longitudinal edge 12,
- on a second side by an end section 4a of the adjacent major cutting edge 4, which end section 4a extends between the upper end point P1 of the leading longitudinal edge 12 and a point P4 on the major cutting edge 4 at a distance from said upper end point P1, and
- on a third side by a blunt edge 9 that extends on the chip flute 3 between said point P4 on the major cutting edge 4 and the dividing point P3 on the leading longitudinal edge 12.
Thus, in this case, the upper edge section 12a of the leading longitudinal edge 12 is formed at an intersection between the margin land 11 and the truncation surface 8. In the embodiment illustrated in Figs 7a-7m, the truncation surface 8 is flat. However, the helix angle reduction may as an alternative be formed by means of a truncation surface consisting of two or more flat and/or convex sub surfaces.

The above-mentioned point P4 on the major cutting edge 4 is preferably located at a distance of 0.3-3.0 mm from the upper end point P1 of the leading longitudinal edge 12, as measured along the major cutting edge 4.

The above-mentioned helix angle reduction is preferably so adapted that a rectilinear second reference line L2 (see Fig 7k) that extends between the upper end point P1 of the leading longitudinal edge 12 and said point P4 on the major cutting edge 4 is inclined at an angle γ of 5-30°, preferably 10-30°, in relation to said plane PL2 that contains the centre axis C1 of the cutting head 1 and the upper end point P1 of the leading longitudinal edge 12. In the embodiment illustrated in Figs 7a-7m, the angle γ is approximately 10°.

In the embodiment illustrated in Figs 7a-7m, each margin land 11 is grinded to form a continuous smooth margin land surface that extends all the way between the upper and lower ends 10a, 10b of the margin 10. As an alternative, an upper part of each margin land 11 located between the upper end 10a of the margin and a plane PL1 (see Fig 7c) that is perpendicular to the centre axis C1 of the cutting head 1 and contains said dividing point P3 may be grinded to form a smooth first margin land surface, whereas the remaining part of the margin land located between the lower end 10b of the margin and this plane PL1 may be grinded to form a smooth second margin land surface, wherein a blunt edge is formed on the margin land 11 at the transition between the first margin land surface and the second margin land surface.

Each clearance surface 7 comprises a peripheral bevelled area 7a, which constitutes the radially outermost part of the clearance surface 7 and through which the clearance surface 7 adjoins the adjacent margin land 11 at the upper transverse edge 14a thereof. This bevelled area 7a extends all along the upper transverse edge 14a of the adjacent margin land 11. On the side of the bevelled area 7a facing the adjacent chip flute 3, the bevelled area 7a is bounded by a radially outermost part 4b of the adjacent major cutting edge 4. The bevelled area 7a may consist of one single flat or convex surface. However, the bevelled area 7a may as an alternative consist of two or more flat and/or convex sub surfaces. When the bevelled area 7a has a convex shape, it is convex as seen in any plane that contains the centre axis C1 of the cutting head 1 and extends across the upper transverse edge 14a of the adjacent margin land 11. The bevelled area 7a suitably extends from the upper transverse edge 14a of the adjacent margin land 11 at an angle θ (see Fig 7j) of 30-80°, preferably 35-45°, in relation to an imaginary reference plane RP perpendicular to the centre axis C1 of the cutting head 1, as seen in any plane that contains the centre axis C1 of the cutting head 1 and extends across said upper transverse edge 14a. Thus, as seen in any plane that contains the centre axis C1 of the cutting head 1 and extends across the upper transverse edge 14a of the adjacent margin land 11, the bevelled area 7a extends from the transverse edge 14a at said angle θ in relation to the reference plane RP.

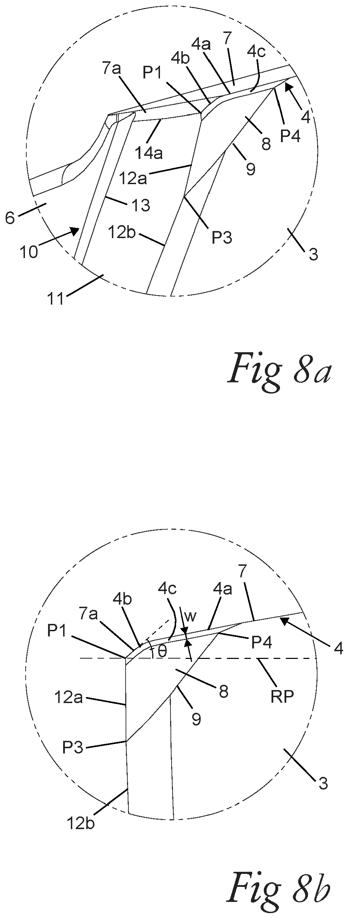

Each major cutting edge 4 comprises a cutting edge chamfer 4c (see Figs 7i and 7j), which is provided at least along the above-mentioned radially outermost part 4b of the major cutting edge. The chamfer width w of this cutting edge chamfer 4c may vary somewhat along the cutting edge chamfer 4c. However, in any position along the longitudinal extension of the cutting edge chamfer 4c, the cutting edge chamfer 4c has a chamfer width w of between 40 and 100 µm. In the embodiment illustrated in Figs 7a-7m, the cutting edge chamfer 4c is provided all along the major cutting edge 4. Figs 8a and 8b illustrate an alternative embodiment, where the cutting edge chamfer 4c is provided along the above-mentioned end section 4a of the major cutting edge 4, whereas the remaining part of the major cutting edge 4 lacks such a cutting edge chamfer.

The above-mentioned tool body 21 has a front end 21a and an opposite rear end 21b. A longitudinal centre axis C2 of the tool body 21 extends between the rear end 21b and the front end 21a of the tool body, wherein this centre axis C2 coincides with the axis of rotation 22 of the drilling tool 20. In the illustrated embodiment, a collar 25 is provided on the tool body 21. A rear part 26 of the tool body 21 located between the collar 25 and the rear end 21b forms a connection member, through which the tool body 21 is mountable, directly or via an intermediate tool holder, to a rotating spindle or the similar of a drilling machine or other type of machine tool. The tool body 21 has a peripheral surface 21c. In the illustrated embodiment, the tool body 21 has 180° rotational symmetry about the centre axis C2 of the tool body.

At its front end 21a, the tool body 21 has a coupling portion 27 designed for engagement with a corresponding coupling portion 17 of the cutting head 1. In the illustrated embodiment, the coupling portion 27 of the tool body 21 comprises two coupling legs 28a, 28b, which project in the axial direction of the tool body 21 and are arranged opposite to each other on opposite sides of the centre axis C2 of the tool body. Between the coupling legs 28a, 28b, there is a space 29 designed for receiving the coupling portion 17 of the cutting head 1.

Each coupling leg 28a, 28b is provided with a torque transfer surface 35 for transferring torque from the tool body 21 to the cutting head 1, which torque transfer surface 35 is designed for abutment against a corresponding torque surface 15 on the cutting head 1 in order to transfer torque from the tool body 21 to the cutting head 1 during rotation of the drilling tool 20 in the intended direction of rotation R. In the illustrated embodiment, the cutting head 1 is provided with two torque surfaces 15 arranged on opposite sides of the centre axis C1 of the cutting head, each of which being designed for abutment against the torque transfer surface 35 on one of the coupling legs 28a, 28b of the tool body 21.

A forwardly facing axial support surface 36 is also provided in the coupling portion 27 at the front part of the tool body 21, wherein this axial support surface 36 is designed for abutment against a corresponding axial abutment surface 16 on the cutting head 1 in order to support the cutting head 1 in axial direction and carry axial forces when the cutting head 1 is pressed against a workpiece. In the illustrated embodiment, the axial support surface 36 on the tool body 21 is located at the bottom of the space 29 between the coupling legs 28a, 28b and the axial abutment surface 16 on the cutting head 1 is provided on a rear face of the cutting head. Furthermore, in the illustrated embodiment, the axial support surface 36 on the tool body 21 is perpendicular to the centre axis C2 of the tool body 21, wherein the axial abutment surface 16 on the cutting head 1 is perpendicular to the centre axis C1 of the cutting head 1.

Two chip flutes 33 are formed in the peripheral surface 21c of the tool body 21 and extend helically diametrically opposite each other and alongside of each other along a part of the tool body 21 from the collar 25 and up to the coupling portion 27 of the tool body. Each one of these chip flutes 33 extends up to an area between the two coupling legs 28a, 28b and is configured to connect to one of the chip flutes 3 on the outside of the cutting head 1 when the coupling portion 17 of the cutting head is received in the space 29 between the coupling legs 28a, 28b. The chip flutes 3, 33 are intended to carry away the chips generated by the cutting edges 4, 5 during drilling of a hole in a workpiece.

In the illustrated embodiment, a coolant channel 30 extends axially through each coupling leg 28a, 28b and opens into the upper end face of the coupling leg.

When the cutting head 1 is attached to the tool body 21 with the coupling portion 17 of the cutting head received in said space 29 between the coupling legs 28a, 28b, the centre axis C1 of the cutting head 1 coincides with the centre axis C2 of the tool body 21, the torque surfaces 15 on the cutting head 1 abut against the corresponding torque transfer surfaces 35 on the coupling legs 28a, 28b and the axial abutment surface 16 on the cutting head 1 abuts against the axial support surface 36 on the tool body 21.

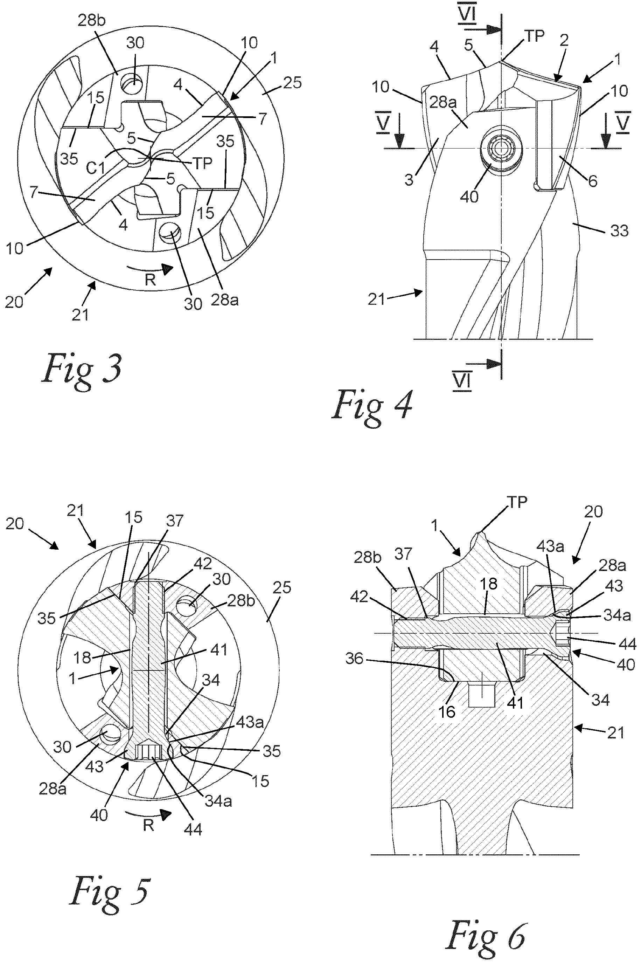

In the illustrated embodiment, the cutting head 1 is releasably fixed to the coupling legs 28a, 28b of the tool body 21 by means of a fastening element 40 in the form of a screw in the manner described in closer detail in US 11 311 948 B2. The fastening element 40 is configured to extend through a through hole 34 in a first one 28a of the coupling legs and through a through hole 18 in the coupling portion 17 of the cutting head, wherein the fastening element 40 is configured to be in threaded engagement with a screw hole 37 in the other coupling leg 28b. The fastening element 40 comprises an elongated shaft 41, which at a front end is provided with an external thread 42 configured for engagement with a corresponding internal thread in said screw hole 37, and a head 43, which is fixed to the shaft 41. The shaft 41 has an external diameter that is smaller than the internal diameter of the through holes 34, 18 in the first coupling leg 28a and the cutting head 1 such that the shaft 41 is receivable with play in these through holes 34, 18, as illustrated in Figs 5 and 6. The through hole 34 in the first coupling leg 28a is provided with a conically shaped internal surface 34a configured for engagement with a corresponding conically shaped external surface 43a on the head 43 of the fastening element. When the fastening element 40 is threaded into the screw hole 37 in the second coupling leg 28b with the shaft 41 of the fastening element 40 received in the through hole 18 in the cutting head 1, the two coupling legs 28a, 28b will, upon tightening of the fastening element 40, be pressed tightly against the coupling portion 17 of the cutting head 1 at opposite sides thereof such that the coupling portion 17 of the cutting head is clamped between the coupling legs 28a, 28b. In the illustrated embodiment, said through holes 18, 34 and said screw hole 37 are so adapted to each other and to the fastening element 40 that, when the fastening element 40 is threaded into the screw hole 37 in the second coupling leg 28b with the shaft 41 of the fastening element 40 received in the through hole 18 in the cutting head 1, the conically shaped external surface 43a on the head 43 will be pressed against the conically shaped internal surface 34a in the through hole 34 in the first coupling leg 28a in such a manner that the cutting head 1 will be pressed by the shaft 41 axially downwards against the axial support surface 36 at the bottom of the space 29 between the coupling legs 28a, 28b. The head 43 of the fastening element 40 is provided with a socket 44 designed for detachable engagement with a torque tool (not shown) to be used for rotating the fastening element 40.

The cutting head 1 of the present invention may as an alternative be fixed to the coupling legs of a tool body in any other suitable manner. The coupling portion of the cutting head 1 may for instance be configured to be fixed to the coupling legs of the tool body by press fit, for instance in the manner described in US 8 430 609 B2, wherein the coupling portion of the cutting head is rotatable in the space between the coupling legs between a disengagement position, in which external clamping surfaces on the coupling portion of the cutting head are disengaged from corresponding internal clamping surfaces on the coupling legs and the torque surfaces on the cutting head are separated from the corresponding torque transfer surfaces on the coupling legs, and an engagement position, in which the external clamping surfaces on the coupling portion of the cutting head are in press fit engagement with the internal clamping surfaces on the coupling legs and the torque surfaces on the cutting head abut against the corresponding torque transfer surfaces on the coupling legs. In this case, the cutting head may be attached to and released from the tool body in a simple and quick manner by being rotated in relation to the tool body about the centre axis of the cutting head.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A cutting head detachably attachable to a tool body (21) and configured to form a drilling tool (20) together with the tool body (21) when attached to it, wherein:
- the cutting head (1) has a rear end (1b) configured to face the tool body (21) and an opposite front end (1a), wherein a longitudinal centre axis (C1) of the cutting head (1) extends between the rear end (1b) and the front end (1a) of the cutting head;
- the cutting head (1) comprises a front face (2) located at the front end (1a) of the cutting head; and
- the cutting head (1) comprises one or more external chip flutes (3), each of which extending in a helically curved path along the cutting head (1) from the front face (2) towards the rear end (1b) of the cutting head, wherein a cutting edge (4) is formed at an intersection between each chip flute (3) and a clearance surface (7) on the front face (2) of the cutting head and a margin (10) provided on a peripheral surface (6) of the cutting head (1) extends adjacent to each chip flute (3) along at least a part thereof from the front face (2) towards the rear end (1b) of the cutting head, said margin (10) having an upper end (10a) facing the front end (1a) of the cutting head and an opposite lower end (10b), wherein the margin (10) comprises a radially outwardly facing margin land (11), which extends between the upper and lower ends (10a, 10b) of the margin and which has a leading longitudinal edge (12), an opposite trailing longitudinal edge (13) and an upper transverse edge (14a) extending between the leading and trailing longitudinal edges (12, 13) at the upper end (10a) of the margin (10), wherein the leading longitudinal edge (12) has an upper end point (P1), which constitutes the axially foremost point of the leading longitudinal edge (12) and through which the leading longitudinal edge (12) is connected to said cutting edge (4) and to said upper transverse edge (14a), and an opposite lower end point (P2), which constitutes the axially rearmost point of the leading longitudinal edge (12),
**characterized in:**
- **that** the leading longitudinal edge (12) of said margin land (11) has an upper edge section (12a) that extends from the upper end point (P1) of the leading longitudinal edge to a dividing point (P3) on the leading longitudinal edge located below said upper end point (P1) as seen in the axial direction of the cutting head (1) and a lower edge section (12b) that extends from said dividing point (P3) to the lower end point (P2) of the leading longitudinal edge, wherein the lower edge section (12b) extends in a helically curved path with a helix angle (α) from the lower end point (P2) of the leading longitudinal edge (12) to said dividing point (P3);
- **that** a rectilinear first reference line (L1) that extends between said dividing point (P3) and the upper end point (P1) of the leading longitudinal edge (12) is inclined at an angle (β) smaller than said helix angle (α) in relation to a plane (PL2) that contains the centre axis (C1) of the cutting head (1) and the upper end point (P1) of the leading longitudinal edge (12);
- **that** said clearance surface (7) comprises a peripheral bevelled area (7a), through which the clearance surface (7) adjoins said margin land (11) at the upper transverse edge (14a) thereof, wherein this bevelled area (7a) is bounded on one of its sides by a radially outermost part (4b) of said cutting edge (4); and
- **that** said cutting edge (4) comprises a cutting edge chamfer (4c), which is provided along at least said radially outermost part (4b) of the cutting edge (4), wherein this cutting edge chamfer (4c) has a chamfer width (w) of between 40 and 100 µm in any position along the longitudinal extension of the cutting edge chamfer (4c).

2. A cutting head according to claim 1, **characterized in that** said first reference line (L1) is inclined at an angle (β) between -20° and +20° in relation to said plane (PL2) that contains the centre axis (C1) of the cutting head (1) and the upper end point (P1) of the leading longitudinal edge (12).

3. A cutting head according to claim 1 or 2, **characterized in that** said dividing point (P3) on the leading longitudinal edge (12) is located at a distance (h1) of 0.3-3.0 mm below the upper end point (P1) of the leading longitudinal edge as seen in the axial direction of the cutting head (1).

4. A cutting head according to any of claims 1-3, **characterized in that** said upper edge section (12a) is formed at an intersection between said margin land (11) and a truncation surface (8) on the adjacent chip flute (3), wherein this truncation surface (8) has a substantially triangular shape and is bounded on a first side by the upper edge section (12a), on a second side by an end section (4a) of the cutting edge (4) extending between the upper end point (P1) of the leading longitudinal edge (12) and a point (P4) on the cutting edge at a distance from said upper end point (P1) and on a third side by an edge (9) extending on the chip flute (3) between said point (P4) on the cutting edge and said dividing point (P3) on the leading longitudinal edge (12).

5. A cutting head according to claim 4, **characterized in that** said point (P4) on the cutting edge is located at a distance of 0.3-3.0 mm from the upper end point (P1) of the leading longitudinal edge (12), as measured along the cutting edge (4).

6. A cutting head according to claim 4 or 5, **characterized in that** said truncation surface (8) is flat.

7. A cutting head according to any of claims 4-6, **characterized in that** a rectilinear second reference line (L2) that extends between the upper end point (P1) of the leading longitudinal edge (12) and said point (P4) on the cutting edge is inclined at an angle (γ) of 5-30°, preferably 10-30°, in relation to said plane (PL2) that contains the centre axis (C1) of the cutting head (1) and the upper end point (P1) of the leading longitudinal edge (12).

8. A cutting head according to any of claims 4-7, **characterized in that** the cutting edge chamfer (4c) is provided at least along said end section (4a) of the cutting edge (4).

9. A cutting head according to any of claims 1-8, **characterized in that** the bevelled area (7a) of said clearance surface (7) extends from the upper transverse edge (14a) of said margin land (11) at an angle (θ) of 30-80°, preferably 35-45°, in relation to a reference plane (RP) perpendicular to the centre axis (C1) of the cutting head (1), as seen in any plane that contains the centre axis (C1) of the cutting head (1) and extends across the upper transverse edge (14a).

10. A cutting head according to any of claims 1-9, **characterized in that** the bevelled area (7a) of said clearance surface (7) is convex as seen in any plane that contains the centre axis (C1) of the cutting head (1) and extends across the upper transverse edge (14a) of said margin land (11).

11. A cutting head according to any of claims 1-10, **characterized in that** the trailing longitudinal edge (13) of said margin land (11) is located closer to the centre axis (C1) of the cutting head (1) than the leading longitudinal edge (12) of the margin land (11) as seen in any plane that is perpendicular to the centre axis (C1) of the cutting head (1) and extends across the margin land (11), in order to provide radial clearance for the margin land (11).

12. A cutting head according to claim 11, **characterized in that** the distance between the centre axis (C1) of the cutting head (1) and the margin land (11) is continuously reduced from the leading longitudinal edge (12) to the trailing longitudinal edge (13) of the margin land (11) in any plane that is perpendicular to the centre axis (C1) of the cutting head (1) and extends across the margin land (11).

13. A cutting head according to any of claims 1-12, **characterized in that** said margin land (11) is convex as seen in any plane that is perpendicular to the centre axis (C1) of the cutting head (1) and extends across the margin land (11).

14. A cutting head according to any of claims 1-13, **characterized in that** said helix angle (α) is 25-45°.

15. A drilling tool comprising an elongated tool body (21) and a cutting head (1) according to any of claims 1-14 detachably attachable to the tool body (21), wherein:
- the tool body (21) has a rear end (21b) configured for attachment to a machine and an opposite front end (21a), wherein a longitudinal centre axis (C2) of the tool body (21) extends between the rear end (21b) and the front end (21a) of the tool body (21);
- the tool body (21) at its front end (21a) has a coupling portion (27) with two or more coupling legs (28a, 28b) projecting in the axial direction of the tool body (21) and distributed about the centre axis (C2) of the tool body;
- the cutting head (1) has a coupling portion (17), which is designed for engagement with the coupling portion (27) of the tool body (21) and which is receivable in a space (29) between said coupling legs (28a, 28b); and
- each coupling leg (28a, 28b) is provided with a torque transfer surface (35) for transferring torque from the tool body (21) to the cutting head (1), which torque transfer surface (35) is configured to abut against a corresponding torque surface (15) on the cutting head (1) when the cutting head is attached to the tool body (21) with the coupling portion (17) of the cutting head received in said space (29) between the coupling legs (28a, 28b) and with the centre axis (C1) of the cutting head (1) coinciding with the centre axis (C2) of the tool body (21).
